# EUROPÄISCHE PATENTSCHRIFT

(11) **EP 1 735 605 B1**
(45) Veröffentlichungstag und Bekanntmachung des Hinweises auf die Patenterteilung: **21.10.2015**
(21) Anmeldenummer: 05716355.2
(22) Anmeldetag: 24.03.2005
(51) Int. Cl.: G01N 3/00, G01N 3/34

(54) **VORRICHTUNG UND VERFAHREN ZUR BEARBEITUNG VON PROBENCHARGEN**
PROCESS AND DEVICE FOR PROCESSING SAMPLE BATCHES
PROCEDE ET DISPOSITIF POUR TRAITER DES JEUX D'ECHANTILLONS

(30) Priorität: 06.04.2004 DE 102004016897
(43) Veröffentlichungstag der Anmeldung: 27.12.2006
(73) Patentinhaber: Underwriters Laboratories Inc., Northbrook, IL 60062-2096 (US)
(72) Erfinder: MEYER, Martin, 42659 Solingen (DE); SARABI, Bahman, 47803 Krefeld (DE); SCHMITZ, Hans-Dieter, 51377 Leverkusen (DE)
(74) Vertreter: Seemann, Ralph
(86) Internationale Anmeldenummer: PCT/EP2005/003150
(87) Internationale Veröffentlichungsnummer: WO 2005/100948

(56) Entgegenhaltungen:
- EP-A- 0 802 405
- EP-A- 1 150 113
- EP-B1- 0 160 458
- DE-A1- 19 844 007
- DE-C- 901 964

## Beschreibung

Die Erfindung betrifft eine Vorrichtung und ein Verfahren zur Bearbeitung von Probenchargen sowie ein entsprechendes Computerprogrammprodukt.

Aus dem Stand der Technik sind verschiedene Materialprüfverfahren bekannt, wie zum Beispiel Pendelschlagversuche. Hierbei sind insbesondere die Pendelschlagversuche nach Charpy und nach Izod von besonderer Bedeutung:
Bei dem Charpy Pendelschlagversuch handelt es sich um ein normiertes Prüfverfahren, welches für die Materialprüfung insbesondere von metallischen Werkstoffen und von Kunststoffen verwendet wird. Die entsprechenden Normen lauten DIN EN 10045-1 "Metallische Werkstoffe, Kerbschlag-Biegeversuch nach Charpy, Teil 1: Prüfverfahren", DIN EN 10045-2 "Metallische Werkstoffe, Kerbschlag-Biegeversuch nach Charpy, Teil 2: Prüfung der Prüfmaschine (Pendelschlagwerk)" und 179 DIN EN ISO 1997-03 "Kunststoffe - Bestimmung der Charpy-Schlagzähigkeit" sowie Stahl-Eisen-Prüfblatt SEP 1315, "Kerbschlag-Biegeversuch mit Ermittlung von Kraft und Weg", Ausgabe Mai 1987, und dem DVM Merkblatt 001, "Messtechnische Anforderungen beim instrumentierten Kerbschlag-Biegeversuch", Ausgabe September 1986.

Ein Charpy Pendelschlagversuch wird üblicherweise mit einem Pendelschlagwerk nach ISO / DIS 148-2 durchgeführt, welches mit einer Instrumentierung zur Ermittlung von Kraft-Zeit-Kurven oder Kraft-Durchbiegungs-Kurven ausgerüstet ist. Als Probe wird im Allgemeinen eine Kerbschlag-Biegeprobe mit V-Kerb nach ISO / DIS 148-1 oder ein anderer Prüfkörper verwendet.

Der Izod Pendelschlagversuch wird ebenso für die Materialprüfung, insbesondere von metallischen Werkstoffen und von Kunststoffen, verwendet. Diesbezüglich kommen ergänzend die folgenden Normen zur Anwendung: DIN EN 2003-2 "Luft- und Raumfahrt- Stahl, Prüfverfahren- Teil 2: Izod-Kerbschlagbiegeversuch", DIN EN ISO 180 "Kunststoffe - Bestimmung der Izod-Schlagzähigkeit".

Auch für Izod Pendelschlagversuche werden gekerbte Prüfkörper verwendet. Bei einem Izod Pendelschlagversuch wird der Prüfkörper so eingespannt, dass die Einkerbung in Richtung auf den Pendelhammer zeigt. Dagegen wird bei einem Charpy Pendelschlagversuch die Probe so positioniert, dass der Pendelhammer auf die der Einkerbung gegenüberliegende Seite des Prüfkörpers auftrifft.

Ein Nachteil bei der Materialprüfung mittels solcher Pendelschlagversuche ist der für die Herstellung der Probekörper erforderliche Aufwand. Im Fall von Kunststoffen werden quaderförmige Probenkörper zunächst mittels eines Kunststoffspritsgießverfahrens hergestellt. Diese Probenkörper müssen dann mit einer V-Kerbe versehen werden, bevor die Pendelschlagversuche durchgeführt werden können. Bei einer großen Versuchsserie ist der Aufwand für die Bearbeitung der Probenkörper entsprechend hoch.

EP 1 150 113 A2 offenbart eine Einrichtung für selbsttätig ablaufende Kerbschlagebiegeversuche und ein Verfahren zur Durchführung derselben. Hiermit kann eine große Anzahl an Kerbschlagbiegeversuchen pro Tag durchgeführt werden. Die menschliche Arbeit beschränkt sich hierbei auf das Zusammenstellen der Serien, also das Beschicken der Temperier- und Transporteinrichtung für die Proben mit den Probenmagazinen oder einer Fräseinrichtung mit eventueller angeschlossener Vermessungseinheit, falls den Proben einer Serie noch eine Schlagkerbe eingefräst werden soll.

Aus DE 901 964 C sind ein Verfahren, ein Probestab und eine Vorrichtung zur Bestimmung der Sprödigkeit von Werkstoffen bekannt, wobei in einen Querschnitt einer bis zum Bruch zu beanspruchenden Probe ein Stift eingesetzt wird, der die Bewegung der Probe während der Biegung derart führt, dass die im Material in der Nähe des Bruchquerschnittes gewöhnlich auftretenden Druckverformungen ganz oder teilweise ausgeschaltet werden.

EP 0 160 458 B1 offenbart eine Vorrichtung zur automatischen chemischen Analyse mit einer Küvetten-Anordnung, die zwei gegenüberliegende Reihen von aufeinanderfolgend angeordneten Probenmagazinen aufweist, wobei jedes Magazin eine Vielzahl von Reagenzgläsern enthält, die reihenförmig angeordnet sind, einer Transporteinrichtung zum Befördern der Probenmagazine, einer Heizeinrichtung und einer Analyseeinrichtung, die eine Probe in einem Reagenzglas nach der Reaktion mit einem zugegebenen Reagenz analysieren kann. Die Reihen sind in verschiedene Abschnitte aufgeteilt, die einen Vorbereitungskreis und einen Reaktionskreis bilden. Die Magazine sind in jedem Reihenabschnitt von Station zu Station beförderbar und zwischen den Reihenabschnitten ihres jeweiligen Kreises versetzbar, so dass Beförderung und Versetzung innerhalb des Vorbereitungskreises unabhängig funktionsfähig von der Beförderung und Versetzung innerhalb des Reaktionskreises sind. Die Analyseeinrichtung vermag photometrische Analysen einer Probe in einem Reagenzglas an einer Teststation auszuführen, während ein Magazin zwischen gegenüberliegenden Abschnitten des Reaktionskreises versetzt wird.

Der Erfindung liegt daher die Aufgabe zu Grunde eine verbesserte Vorrichtung zur Bearbeitung von Proben zu schaffen. Der Erfindung liegt ferner die Aufgabe zu Grunde ein verbessertes Verfahren zur Bearbeitung von Proben sowie ein entsprechendes Computerprogrammprodukt zu schaffen.

Die der Erfindung zu Grunde liegenden Aufgaben werden jeweils mit den Merkmalen der entsprechenden unabhängigen Patentansprüche gelöst. Bevorzugte Ausführungsformen der Erfindung sind in den abhängigen Patentansprüchen angegeben.

Die vorliegende Erfindung ermöglicht die effiziente Fertigung von Proben, insbesondere für die Zwecke der Materialprüfung. Besonders vorteilhaft ist, dass erfindungsgemäß die Bearbeitung der Proben parallelisiert erfolgt, womit ein besonders hoher Durchsatz erreichbar ist.

Nach einer bevorzugten Ausführungsform der Erfindung werden Probenchargen mit einer Kerbung für die spätere Durchführung eines Pendelschlagversuchs versehen. Die Erfindung ist jedoch keineswegs auf die Bearbeitung von Proben zur Herstellung von Prüfkörpern für Pendelschlagversuche beschränkt, sondern kann auch auf anderen Gebieten eingesetzt werden, auf denen Proben vor der Durchführung des eigentlichen Prüfvorgangs noch bearbeitet werden müssen.

Nach einer bevorzugten Ausführungsform der Erfindung wird ein X / Y Magazinprobentisch mit Magazinen verwendet, wobei jedes der Magazine zur Aufnahme einer Probencharge von Proben desselben Materials ausgebildet ist. Der Hintergrund hierfür ist, dass zur Durchführung einer Materialprüfung im Allgemeinen mehrere Proben desselben Materials untersucht werden müssen, um statistische Streuungen auszufiltern. Beispielsweise dient jedes Magazin zur Aufnahme von zehn Proben. Ein hierfür geeigneter Magazintisch ist kommerziell von der Firma Zwick erhältlich.

Erfindungsgemäß hat jedes Magazin einen eindeutigen maschinenlesbaren Code, über den das Magazin von der Steuerung adressiert werden kann. Für die Planung der Bearbeitung der Proben werden den verschiedenen Probenchargen jeweils solche Codes zugeordnet. Die Probencharge, der ein bestimmter Code X zugeordnet ist, wird also in dem Magazin mit dem Code X angeordnet. Die Magazine auf dem Magazinprobentisch werden also jeweils mit Probenchargen gefüllt, denen Codes zugeordnet sind, die dem Code des jeweiligen Magazins entsprechen.

Erfindungsgemäß ist der Code eines Magazins in maschinenlesbarer Form an dem Magazin angeordnet, so dass das betreffende Magazin von einer Probenzuführung automatisch identifiziert werden kann.

Erfindungsgemäß wird so vorgegangen, dass eine Probenzuführung die erste zu bearbeitende Probencharge aus dem betreffenden Magazin entnimmt und zu einem Eingangsschacht transportiert. Durch eine Vereinzelungsvorrichtung werden die Proben aus dem Eingangsschacht zu einer Bearbeitungseinheit gebracht und dort einem Bearbeitungsschritt unterzogen. Bei der Vereinzelungsvorrichtung handelt es sich vorzugsweise um einen Probenschieber. Bei der Bearbeitungseinheit handelt es sich um eine Fräse.

Die bearbeiteten Proben werden einzeln nach erfolgter Bearbeitung ausgegeben und einzeln zu einem Ausgabeschacht transportiert. Vorzugsweise befinden sich der Ausgangsschacht und der Eingangsschacht zwischen dem Magazinprobentisch und der Bearbeitungseinheit und sind in dieser Richtung hintereinander angeordnet. Nach einer weiteren bevorzugten Ausführungsform fährt die Probenzuführung wieder zu dem Magazinprobentisch zurück, nachdem eine Probencharge zu dem Eingangsschacht transportiert worden ist. Die Probenzuführung entnimmt dann die nächste zu bearbeitende Probencharge aus dem entsprechenden Magazin. Die Probenzuführung verbleibt dann im Bereich des Magazinprobentischs und zwar solange, bis die vorhergehende Probencharge vollständig bearbeitet worden ist und die bearbeiteten Proben in dem Ausgangsschacht abgelegt worden sind.

Nachdem dies erfolgt ist, fährt die Probenzuführung in Richtung auf die Bearbeitungseinheit, bestückt den Eingangsschacht mit der nächsten zu bearbeitenden Probencharge und fährt dann in Richtung auf den Magazinprobentisch in eine Entnahmeposition zurück, um die bearbeiteten Proben aus dem Ausgangsschacht zu entnehmen. Nach der Entnahme der bearbeiteten Proben aus dem Ausgangsschacht fährt die Probenzuführung gänzlich zu dem Magazinprobentisch zurück und legt die bearbeiteten Proben in einem der Magazine ab. Vorzugsweise werden die bearbeiteten Proben in demselben Magazin abgelegt, aus dem sie vor dem Beginn der Bearbeitung entnommen worden sind.

Besonders vorteilhaft ist hierbei, dass die Vorgänge zur Vereinzelung, Bearbeitung und Ausgabe einer Probencharge und die Vorgänge der Zuführung der nächsten Probencharge und des Abtransports der zuvor bearbeiteten Probencharge zumindest teilweise parallel ablaufen, wodurch ein besonders hoher Durchsatz erreichbar ist.

Nach einer weiteren bevorzugten Ausführungsform der Erfindung hat die Bearbeitungseinheit eine Abdeckung, wie zum Beispiel einen Span- oder einen Staubschutz, mit einer Öffnung, aus der bearbeitete Proben einzeln entnommen werden können.

Nach einer weiteren bevorzugten Ausführungsform der Erfindung ist die Bearbeitungseinheit als Fräse mit zwei unterschiedlichen Frässpindeln für unterschiedliche Proben, wie zum Beispiel verstärkte oder normale Proben ausgebildet. Die Auswahl der Spindel erfolgt durch eine Steuerungseinheit basierend auf einem Datenbankzugriff.

Nach einer weiteren bevorzugten Ausführungsform der Erfindung ist der Ausgangsschacht um 180° drehbar. Die Drehung der Probencharge in dem Ausgangsschacht hängt davon ab, ob die Proben der Probencharge für die Durchführung eines Izod oder eines Charpy Pendelschlagversuchs vorgesehen sind. Wenn beispielsweise ein Charpy Pendelschlagversuch vorgesehen ist, erfolgt keine Drehung; für den Izod Pendelschlagversuch dagegen erfolgt eine Drehung um 180°. Entsprechend werden die Probenchargen gedreht oder ungedreht auf dem Magazinpröbentisch abgelegt. Dies hat den Vorteil, dass sich die Proben in der für die Durchführung des jeweiligen Versuchs geeigneten Position befinden und bei der Zuführung zu dem betreffenden Pendelschlagwerk nicht erneut gedreht werden müssen.

Nach einer weiteren bevorzugten Ausführungsform der Erfindung erfolgt die Steuerung der Bearbeitung durch eine Steuereinheit, die mit einem Laborinformationsmanagementsystem (LIMS) verbindbar ist. Das LIMS beinhaltet eine Datenbank, in der die Versuchsplanung gespeichert ist. Die Speicherung der Versuchsplanung kann in Form einer Tabelle erfolgen, wobei den einzelnen Probenchargen die Magazincodes zugeordnet werden. Ferner beinhaltet die Datenbank für jede Probencharge eine Information, ob es sich um eine Probencharge für einen Izod oder einen Charpy Pendelschlagversuch handelt und ob die Probencharge aus verstärkten oder normalen Proben besteht.

Im weiteren wird eine bevorzugte Ausführungsform der Erfindung mit Bezugnahme auf die Zeichnungen näher erläutert. Es zeigen:
- Figur 1: eine perspektivische Ansicht einer Ausführungsform einer erfindungsgemäßen Vorrichtung zur Bearbeitung von Proben mit einer Steuereinheit,
- Figur 2: eine Ausführungsform eines erfindungsgemäßen Verfahrens zur Bearbeitung von Proben.

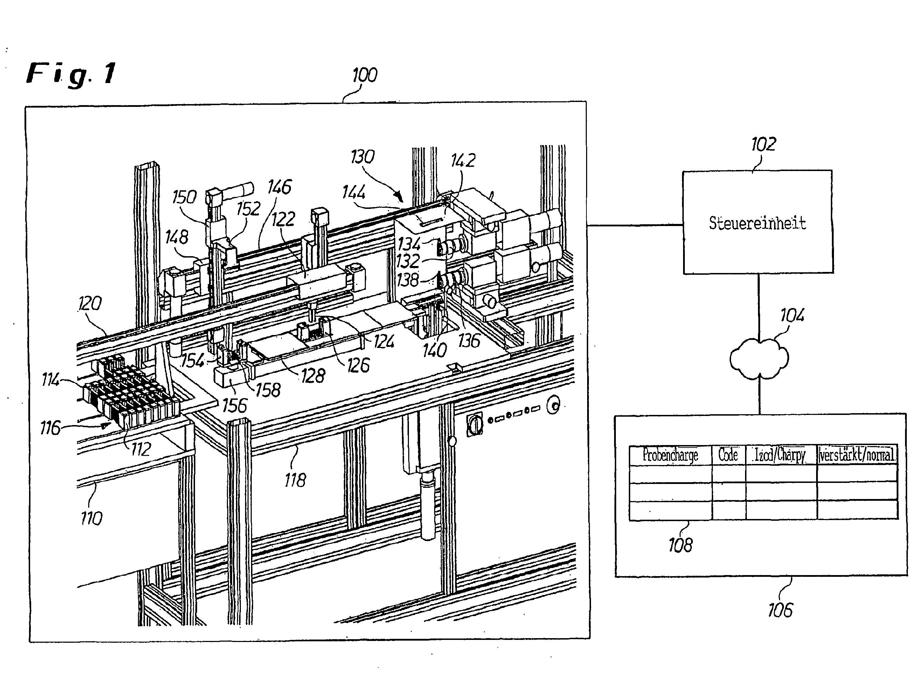

Die Figur 1 zeigt eine perspektivische Ansicht einer Ausführungsform einer erfindungsgemäßen Vorrichtung zur Bearbeitung von Probenchargen. In der hier betrachteten Ausführungsform ist die Vorrichtung als Kerbfräsautomat 100 ausgebildet. Der Kerbfräsautomat 100 dient zur Bearbeitung von Probenchargen, die zum Beispiel pro Probencharge zehn Prüfkörper aufweisen. Durch den Kerbfräsautomat 100 werden die Proben der Probenchargen mit einer V-Nut versehen, um anschließend einen Pendelschlagversuch zum Beispiel nach Charpy oder Izod durchzuführen.

Der Kerbfräsautomat 100 ist mit einer Steuereinheit 102 verbunden, die zur Ablaufsteuerung der Bearbeitung der Probenchargen durch den Kerbfräsautomat 100 dient. Bei der Steuereinheit 102 kann es sich zum Beispiel um einen Personal Computer mit einem entsprechenden Steuerungsprogramm handeln.

Die Steuereinheit 102 ist über ein Netzwerk 104, wie zum Beispiel ein Intranet oder das Internet, mit einem Laborinformationsmanagementsystem (LIMS) 106 verbunden. Das LIMS 106 beinhaltet eine Datenbank 108. In der Datenbank 108 sind Angaben zu den zu bearbeitenden Probenchargen gespeichert.

Jeder zu bearbeitenden Probencharge ist ein Code zugeordnet. Ferner beinhaltet die Datenbank 108 eine Angabe, ob die Proben der Probencharge für einen Izod oder einen Charpy Pendelschlagversuch vorgesehen sind und ob es sich bei den Proben der betreffenden Probencharge um verstärkte oder normale Proben handelt. Ferner können in der Datenbank 108 für die Bearbeitung der betreffenden Probencharge materialspezifische Parameter gespeichert sein; in dem Fall, dass es sich bei der Bearbeitungseinheit um eine Fräse handelt, kann es sich hierbei um die Drehzahl des Fräsers und/oder den Vorschub des Frässchlittens, d.h. der Probenklemme 140, handeln.

Der Kerbfräsautomat 100 hat einen X / Y Magazinprobentisch 110 auf dem sich mehrere Magazine 112 befinden. Jedes der Magazine 112 trägt einen eindeutigen maschinenlesbaren Barcode 114. Über die Barcodes 114 ist jedes der Magazine 112 von der Steuereinheit 102 eindeutig adressierbar.

Jedes der Magazine 112 dient zur Aufnahme einer Probencharge 116 von zum Beispiel zehn Proben. Bei den Proben einer Probencharge 116 handelt es sich um Proben desselben Materials, welches einer Materialprüfung unterzogen werden soll.

Neben dem Magazinprobentisch 110 befindet sich ein Bearbeitungstisch 118. Zwischen dem Magazinprobentisch 110 und dem Bearbeitungstisch 118 erstreckt sich eine Transportschiene 120. Auf der Transportschiene 120 befindet sich eine Probenzuführung 122 mit einem Greifer 124.

Die Transportschiene 120 ist so angeordnet, dass die Probenzuführung 122 über den Bereich des Magazinprobentischs 110 gefahren werden kann, auf dem sich die Magazine 112 befinden. Mit dem Greifer 124 kann aus einem Magazin 112 eine Probencharge 116 entnommen werden. Die Probenzuführung 122 kann dann so angesteuert werden, dass sie von dem Bereich über dem Magazinprobentisch 110 zu dem Bearbeitungstisch 118 auf der Transportschiene 120 fährt und zwar bis zu einem Endbereich der Transportschiene 120 unterhalb dessen sich ein Eingangsschacht 126 befindet. Der Greifer 124 kann dann die Probencharge 116, die zuvor aus einem der Magazine 112 entnommen worden ist, in dem Eingangsschacht 126 ablegen.

Vor dem Eingangsschacht 126 befindet sich ein Probenschieber 128, der eine Vor/Zurückbewegung durchführen kann. Der Probenschieber dient zur Vereinzelung von Proben der in dem Eingangsschacht 126 befindlichen Probencharge 116. Der Probenschieber 128 schiebt jeweils eine einzelne der Proben der Probencharge 116 in eine Bearbeitungseinheit 130.

Bei der Bearbeitungseinheit 130 handelt es sich um eine Fräse mit einer Frässpindel 132 mit einem Fräsdiamanten 134 und einer Frässpindel 136 mit einem normalen Fräskopf 138.

Zur Bearbeitung einer Probe der Probencharge 116 wird diese aus der Probencharge 116 durch den Probenschieber 128 vereinzelt und der Bearbeitungseinheit 130 zugeführt. Dort wird sie von einer Probenklemme 140 zur Bearbeitung gehalten.

Die Bearbeitungseinheit 130 hat ferner einen Schutz 142 zum Schutz gegen Späne, die bei der Bearbeitung der Probe abgetragen werden. Der Schutz 142 umgibt den Bereich der Bearbeitungseinheit 130 nach allen Seiten; in der Figur 1 ist zur Verdeutlichung des inneren Aufbaus der Bearbeitungseinheit 130 nur ein Teilabschnitt des Schutzes 142 gezeigt.

Der Schutz 142 hat oben eine schlitzförmige Öffnung 144, durch die eine Probe nach der Bearbeitung in der Bearbeitungseinheit 130 von oben entnommen werden kann.

Zum Abtransport einzelner bearbeiteter Proben von der Bearbeitungseinheit 130 ist eine weitere Transportschiene 146 vorgesehen, die im wesentlichen parallel zu der Transportschiene 120 verläuft. Auf der Transportschiene 146 befindet sich ein Probentransport 148 mit einer Probenablage 150, die auf und ab bewegt werden kann.

An der Probenablage 150 befindet sich ein Probensauger 152, der eine einzelne Probe halten kann. Mit dem Probensauger 152 kann eine Probe nach der Bearbeitung in der Bearbeitungseinheit 130 durch die Öffnung 144 entnommen werden und dann in Richtung auf den Magazinprobentisch 110 über dem Bearbeitungstisch 118 transportiert werden.

In einem dem Magazinprobentisch 110 zugewandten Endbereich der Transportschiene 146 befindet sich ein Ausgangsschacht 154 zur Aufnahme einer Charge von bearbeiteten Proben. Der Ausgangsschacht 154 ist so angeordnet, dass er sowohl von dem Probensauger 152 als auch von dem Greifer 124 erreicht werden kann. Der Ausgangsschacht 154 befindet sich von der Bearbeitungseinheit 130 in Richtung auf den Magazinprobentisch 110 betrachtet, hinter dem Eingangsschacht 126. Der Ausgangsschacht 154 ist auf einem Drehmodul 156 angeordnet, welches eine Drehung des Ausgangsschachts 154 mit der in dem Ausgangsschacht 154 befindlichen Probencharge 158 von bearbeiteten Proben um 180° erlaubt.

Zum Betrieb der Vorrichtung der Figur 1 wird zunächst der Magazinprobentisch 110 automatisch oder manuell mit Probenchargen bestückt. Die Bestückung erfolgt mit den gemäß der Datenbank 108 zur Bearbeitung anstehenden Probenchargen. Jeder der zu bearbeitenden Probenchargen ist dabei in der Datenbank 108 ein bestimmter Code zugeordnet, der angibt, in welches der Magazine 112 die betreffende Probencharge einzubringen ist. Dieser Code ist identisch mit dem Barcode 114.

Nach der Bestückung des Magazinprobentischs 110 befindet sich also in jedem der Magazine 112 eine Probencharge 116, der über die Datenbank 108 ein Code zugeordnet ist, der dem Barcode 114 des entsprechenden Magazins 112, in dem sich die Probencharge 116 befindet, gleicht.

Vor Beginn der Bearbeitung lädt die Steuereinheit 102 zumindest denjenigen Teil der Datenbank 108 von dem LIMS 106 über das Netzwerk 104, der die zu bearbeitenden Probenchargen betrifft. Die Steuereinheit 102 steuert nach der Bestückung des Magazinprobentischs 110 die Probenzuführung 122 an, um das Magazin 112 mit der ersten zu bearbeitenden Probencharge 116 zu adressieren und die erste zu bearbeitenden Probencharge 116 mit dem Greifer 124 aus dem Magazin 112 zu entnehmen.

Die Probenzuführung 122 fährt dann auf der Transportschiene 120 in Richtung auf die Bearbeitungseinheit 130 und legt die Probencharge 116 in den Eingangsschacht 126 in der in der Figur 1 gezeigten Position. Die Probenzuführung 122 fährt danach in Richtung auf den Magazinprobentisch 110 zurück und hält dabei über dem Ausgangsschacht 154 an, um die Probencharge 158 von bearbeiteten Proben aus dem Ausgangsschacht 154 zu entnehmen.

Danach fährt die Probenzuführung 122 weiter Richtung Magazinprobentisch 110 und legt die Probencharge 158 in einem der Magazine 112 ab. Vorzugsweise wird die Probencharge 158 in demselben Magazin 112 abgelegt, aus dem zuvor die entsprechende unbearbeitete Probencharge 116 entnommen worden ist.

Nachdem die unbearbeitete Probencharge 116 in dem Eingangsschacht 126 von dem Greifer 124 abgelegt worden ist, beginnt der Probenschieber 128 zu arbeiten und bringt eine der Proben der Probencharge 116 aus dem Eingangsschacht 126 zu der Bearbeitungseinheit 130. Dort wird die betreffende Probe von der Probenklemme 140 fixiert und mit der Frässpindel 132 oder 136 bearbeitet, je nach dem ob es sich um eine normale oder um eine verstärkte Probe handelt.

Nach dem Fräsvorgang wird die bearbeitete Probe durch die Öffnung 144 in dem Schutz 142 aus der Bearbeitungseinheit 130 von dem Probensauger 152 entnommen und zu dem Ausgangsschacht 154 gebracht, wo diese bearbeitete Probe abgelegt wird. Die Probenablage fährt dann wieder zu der Bearbeitungseinheit 130 zurück, um die nächste bearbeitete Probe aus der Öffnung 144 zu entnehmen und zu dem Ausgangsschacht 154 zu bringen. Dieser Vorgang wiederholt sich solange, bis alle Proben aus der Probencharge 116 des Eingangsschachts 126 bearbeitet worden sind.

Während dieser Bearbeitungszeit der Probencharge 116 nimmt die Probenzuführung 122 die nächste zu bearbeitende Probencharge 116 aus einem der Magazine 112 des Magazinprobentischs 110 mit dem Greifer 124 auf und verbleibt dann in einem Bereich außerhalb des Bearbeitungstischs 118, um eine Kollision der Probenzüführung 122 mit der Probenablage 150 zu vermeiden.

Nachdem die aktuelle Probencharge des Eingangsschachts 126 vollständig bearbeitet worden ist und die bearbeiteten Proben in dem Ausgangsschacht 154 abgelegt worden sind, kann die Probenzuführung 122 vorfahren und die nächste Probencharge zu dem Eingangsschacht 126 bringen. Danach fährt die Probenzuführung 122 wieder in Richtung auf den Magazinprobentisch 110 zurück und nimmt dabei die bearbeiteten Proben, das heißt die Probencharge 158, aus dem Ausgangsschacht 154 mit.

Vor der Aufnahme der Probencharge 158 aus dem Ausgangsschacht 154 kann der Ausgangsschacht 154 um 180° gedreht werden, je nachdem ob es sich um Proben für einen Izod oder einen Charpy Pendelschlagversuch handelt. Die betreffende Information kommt aus der Datenbank 108 und das Drehmodul 156 wird von der Steuereinheit 102 erforderlichenfalls entsprechend angesteuert.

Von besonderem Vorteil ist hierbei, dass die Vorgänge der Zuführung von zu bearbeitenden Probenchargen 116, der Vereinzelung von Proben aus einer zu bearbeitenden Probencharge 116, der Bearbeitung der Proben, des Abtransports der bearbeiteten einzelnen Proben, der Sammlung der bearbeiteten einzelnen Proben einer Probencharge und des Rücktransports der bearbeiteten Probencharge zu dem Magazinprobentisch hochgradig parallelisiert in einer "Bearbeitungspipeline" erfolgt, so dass die Bearbeitung voll automatisch und mit einem hohen Durchsatz vor sich geht.

Vorteilhaft ist ferner, dass die bearbeiteten Proben einzeln aus der Bearbeitungseinheit 130 entnommen werden, da diese aufgrund des Bearbeitungsvorgangs im Allgemeinen einen sogenannten "Bart" aufweisen und daher für kurze.Zeit abkühlen sollen, bevor sie in den Ausgangssacht 154 gestapelt werden. Dadurch wird verhindert, dass die einzelnen bearbeiteten Proben aneinander haften. Von weiterem Vorteil ist, dass die bearbeitete Probencharge mittels des Drehmoduls 156 so ausgerichtet werden kann, wie es für die weitere Materialprüfung in einem Izod oder einen Charpy Pendelschlagversuch erforderlich ist.

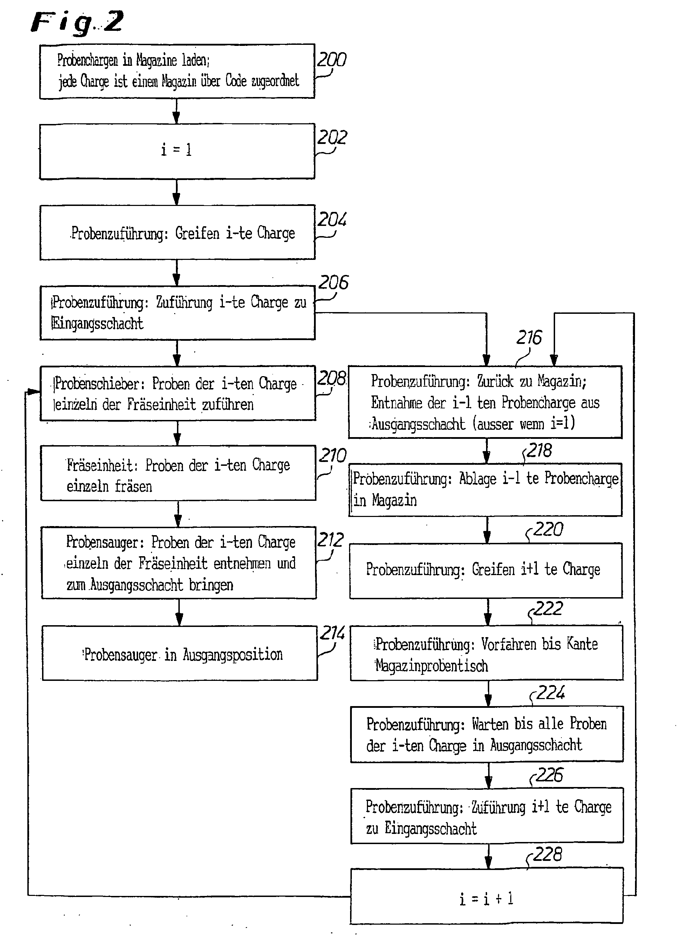

Die Figur 2 zeigt ein Flussdiagramm für den Betrieb einer Vorrichtung des Typs, wie es in der Figur 1 dargestellt ist. In dem Schritt 200 werden die zu bearbeitenden Probenchargen in Magazine geladen, das heißt jedes Magazin wird mit einer Probencharge eines bestimmten zu prüfenden Materials beladen. Jedem Magazin ist ein Code zugeordnet, so dass die einzelnen Probenchargen in den Magazinen von einer Steuereinheit adressierbar sind.

In dem Schritt 202 wird der Index i der zu bearbeitenden Probencharge als i = 1 initialisiert.

In dem Schritt 204 wird mittels einer Probenzuführung die erste zu bearbeitende Probencharge aufgegriffen und in dem Schritt 206 einem Eingangsschacht zugeführt.

Danach werden die Proben der i-ten Charge einzeln der Bearbeitungseinheit, das heißt beispielsweise einer Fräseinheit, von einem Probenschieber zugeführt. Dies erfolgt in dem Schritt 208. In der Bearbeitungseinheit werden die Proben einzeln bearbeitet, das heißt beispielsweise gefräst (Schritt 210).

Nach der Bearbeitung werden die Proben von einem Probensauger einzeln der Bearbeitungseinheit entnommen und zu einem Ausgangsschacht gebracht. Nachdem alle Proben der i-ten Charge bearbeitet worden sind und zu dem Ausgangsschacht gebracht worden sind, fährt der Probensauger in dem Schritt 214 in seine Ausgangsposition.

Ferner wird nach dem Schritt 206 der Schritt 216 ausgeführt. In dem Schritt 216 fährt die Probenzuführung zurück zu den Magazinen. Wenn zuvor bereits eine Probencharge bearbeitet worden ist, das heißt wenn i > 1, wird beim Zurückfahren zu den Magazinen die zuvor bearbeitete Probencharge i-1 aus dem Ausgangsschacht entnommen und mit zu den Magazinen transportiert.

In dem Schritt 218 wird gegebenenfalls die i-1 te Probencharge in einem der Magazine abgelegt.

In dem Schritt 220 greift die Probenzuführung die nächste zu bearbeitende Probencharge i+1. Danach fährt die Probenzuführung in dem Schritt 222 bis zur Kante des Magazinprobentischs, bleibt also außerhalb des Bearbeitungstischs. Dort wartet die Probenzuführung in dem Schritt 224 bis alle Proben der i-ten Probencharge in dem Ausgangsschacht sind. Sobald dies der Fall ist, fährt die Probenzuführung in dem Schritt 226 zu dem Eingangsschacht, um die nächste zu bearbeitende Probencharge i+1 dorthin zu transportieren.

In dem Schritt 228 wird der Index i um 1 inkrementiert und die Ablaufsteuerung geht zurück zu den Schritten 216 und 208. Dieser Vorgang läuft solange ab, bis alle zu bearbeitenden Probenchargen in den Magazinen bearbeitet worden sind.

### Bezugszeichenliste

- Kerbfräsgerät: 100
- Steuereinheit: 102
- Netzwerk: 104
- LIMS: 106
- Datenbank: 108
- Magazinprobentisch: 110
- Magazin: 112
- Barcode: 114
- Probencharge: 116
- Bearbeitungstisch: 118
- Transportschiene: 120
- Probenzuführung: 122
- Greifer: 124
- Eingangsschacht: 126
- Probenschieber: 128
- Bearbeitungseinheit: 130
- Frässpindel: 132
- Fräsdiamanten: 134
- Frässpindel: 136
- Fräskopf: 138
- Probenklemme: 140
- Schutz: 142
- Öffnung: 144
- Transportschiene: 146
- Probentransport: 148
- Probenablage: 150
- Probensauger: 152
- Ausgangsschacht: 154
- Drehmodul: 156
- Probencharge: 158

## Patentansprüche

1. Vorrichtung zur Bearbeitung von Probenchargen (116) mit
- einer Anzahl von Magazinen (112) zur Aufnahme der Probenchargen mit einem maschinenlesbaren Code (114) an jedem der Magazine,
- ersten Transportmitteln (120, 122, 124) zum Transport einer der Probenchargen von einem der Magazine zu einem Eingang (126) einer Vereinzelungsvorrichtung (128) und zum Transport einer bearbeiteten Probencharge (158) von einem Ausgang (154) zu einem der Magazine,
- einer Bearbeitungseinheit (130) zur Bearbeitung einzelner von der Vereinzelungsvorrichtung zugeführter Proben, wobei die Bearbeitungseinheit eine Kerbfräse (132, 134, 136, 140) aufweist, wobei die Kerbfräse eine erste und eine zweite Frässpindel aufweist,
- einer Steuereinheit (102) zur Auswahl der ersten oder der zweiten Frässpindel für die Bearbeitung einer Probe je nach dem Probentyp
- zweiten Transportmitteln (146, 148, 150, 152) zum Transport einzelner bearbeiteter Proben von der Bearbeitungsvorrichtung zu dem Ausgang.

2. Vorrichtung nach Anspruch 1 mit einem X / Y Magazinprobentisch (110) zur Aufnahme der Magazine.

3. Vorrichtung nach Anspruch 1, wobei es sich bei dem.maschinenlesbaren Code um einen Barcode handelt.

4. Vorrichtung nach einem der vorhergehenden Ansprüche 1 bis 3, wobei der Eingang der Vereinzelungsvorrichtung als Eingangsschacht zur Aufnahme einer Probencharge von den ersten Transportmitteln ausgebildet ist und die Vereinzelungsvorrichtung einen Probenschieber zur einzelnen Zuführung von Proben aus dem Eingangsschacht zu der Bearbeitungseinrichtung aufweist.

5. Vorrichtung nach einem der vorhergehenden Ansprüche 1 bis 4, wobei der Ausgang und der Eingang zwischen den Magazinen und der Bearbeitungseinheit hintereinander angeordnet sind.

6. Vorrichtung nach einem der vorhergehenden Ansprüche 1 bis 5, wobei der Ausgang um 180° drehbar ausgebildet ist und die Steuereinheit den Ausgang in Abhängigkeit davon dreht, ob es sich bei den Proben um Proben für einen Charpy oder einen Izod Pendelschlagversuch handelt.

7. Vorrichtung nach einem der vorhergehenden Ansprüche 1 bis 6, wobei die ersten und die zweiten Transportmittel zum Transport mit einer translatorischen Bewegung ausgebildet sind, wobei die Bahnen der translatorischen Bewegungen im Wesentlichen parallel zueinander verlaufen.

8. Vorrichtung nach einem der vorhergehenden Ansprüche 1 bis 7 mit einer Steuereinheit, die mit einem Laborinformationsmanagementsystem LIMS (106) verbindbar ist.

9. Verfahren zur Bearbeitung von Probenchargen mit folgenden Schritten:
a) Zuführung einzelner Proben einer Probencharge i zu einer Bearbeitungseinheit, sequentielle Bearbeitung der Proben in der Bearbeitungseinheit und Transport der bearbeiteten Proben der Charge i zu einem Ausgang,
b) Entnahme einer Probencharge i+1 aus einem der Probencharge i+1 zugeordneten Magazin, Transport der Probencharge i+1 zu einem Eingang einer Vereinzelungsvorrichtung, nachdem alle Proben der Probencharge i zu dem Ausgang transportiert worden sind, Entnahme der Probencharge i aus dem Ausgang und Transport der Probencharge i zu einem der Probencharge i zugeordneten Magazin,
wobei die Schritte a) und b) wiederholt durchgeführt werden und die Durchführung der Schritte a) und b) zumindest teilweise zeitgleich erfolgt, wobei die Bearbeitung der Proben in einem Fräsvorgang erfolgt, wobei die Art des Fräsvorgangs von der Probenart abhängt, wobei jeder der Probenchargen ein Code zugeordnet ist, mit folgenden weiteren Schritten:
- Empfang eines Steuerungsbefehls zur Bearbeitung der Probencharge i+1,
- Lesen des Codes, der der Probencharge i+1 zugeordnet ist, von dem Magazin, in dem sich die Probencharge i+1 befindet.

10. Verfahren nach Anspruch 9, wobei der Ausgang in Abhängigkeit davon, ob eine Probencharge i für einen Charpy oder einen Izod Pendelschlagversuch bestimmt ist, gedreht wird.

11. Computerprogrammprodukt, insbesondere digitaler Speicher, mit Programmmitteln zur Steuerung einer Vorrichtung zur Bearbeitung von Probenchargen in folgenden Schritten:
a) Zuführung einzelner Proben einer Probencharge i zu einer Bearbeitungseinheit, sequentielle Bearbeitung der Proben in der Bearbeitungseinheit und Transport der bearbeiteten Proben der Charge i zu einem Ausgang,
b) Entnahme einer Probencharge i+1 aus einem der Probencharge i+1 zugeordneten Magazin, Transport der Probencharge i+1 zu einem Eingang einer Vereinzelungsvorrichtung, nachdem alle Proben der Probencharge i zu dem Ausgang transportiert worden sind, Entnahme der Probencharge i aus dem Ausgang und Transport der Probencharge i zu einem der Probencharge i zugeordneten Magazin,
wobei die Schritte a) und b) wiederholt durchgeführt werden und die Durchführung der Schritte a) und b) zumindest teilweise zeitgleich erfolgt, wobei die Bearbeitung der Proben in einem Fräsvorgang erfolgt, wobei die Art des Fräsvorgangs von der Probenart abhängt, wobei jeder der Probenchargen ein Code zugeordnet ist, mit folgenden weiteren Schritten:
- Empfang eines Steuerungsbefehls zur Bearbeitung der Probencharge i+1,
- Lesen des Codes, der der Probencharge i+1 zugeordnet ist, von dem Magazin, in dem sich die Probencharge i+1 befindet,
wobei die Programmmittel zur Steuerung der Bearbeitungseinheit (130) je nach der Art der zu bearbeitenden Proben einer Probencharge ausgebildet sind.

12. Computerprogrammprodukt nach Anspruch 11, wobei die Programmmittel zur Abfrage einer Datenbank (108) ausgebildet sind, wobei in der Datenbank die Codes von zu bearbeitenden Probenchargen gespeichert sind.

13. Computerprogrammprodukt nach Anspruch 12, wobei die Datenbank Teil eines Laborinformationsmanagementsystems (LIMS) (106) ist.

14. Computerprogrammprodukt nach einem der vorhergehenden Ansprüche 11 bis 13, wobei die Programmmittel zur Steuerung des Ausgangs in Abhängigkeit davon, ob es sich bei den Proben einer Probencharge um Proben für einen Izod oder einen Charpy Pendelschlagversuch handelt, ausgebildet sind.

## Claims

1. Device for processing sample batches (116), comprising
- a number of magazines (112) for receiving the sample batches, with a machine-readable code (114) on each of the magazines,
- first transport means (120, 122, 124) for transporting one of the sample batches from one magazine to an inlet (126) of a separation device (128) and for transporting one processed sample batch (158) from an outlet (154) to one of the magazines,
- a processing unit (130) for processing individual samples fed from the separation device, wherein the processing unit has a notch-milling machine (132, 134, 136, 140), wherein the notch-milling machine has a first and a second milling spindle,
- a control unit (102) for selecting the first or the second milling spindle for processing a sample, depending on the type of sample,
- second transport means (146, 148, 150, 152) for transporting individual processed samples from the processing device to the outlet.

2. Device according to claim 1 with an X/Y magazine sample table (110) for receiving the magazines.

3. Device according to claim 1, wherein the machine-readable code is a barcode.

4. Device according to one of the previous claims 1 to 3, wherein the inlet of the separation device is configured as an inlet shaft for receiving a sample batch from the first transport means and the separation device has a sample slider for feeding samples individually out of the inlet shaft to the processing equipment.

5. Device according to one of the previous claims 1 to 4, wherein the outlet and the inlet are arranged behind each other between the magazines and the processing unit.

6. Device according to one of the previous claims 1 to 5, wherein the outlet is configured rotatable by 180° and the control unit rotates the outlet depending on whether the samples are samples for a Charpy or an Izod pendulum impact test.

7. Device according to one of the previous claims 1 to 6, wherein the first and the second transport means for transporting are configured with a translational motion, wherein the paths of the translation motions run substantially parallel to each other.

8. Device according to one of the previous claims 1 to 7 with a control unit which can be connected to a laboratory information management system LIMS (106).

9. Method for processing sample batches with the following steps:
a) Feeding of individual samples of a sample batch i to a processing unit, sequential processing of the samples in the processing unit and transporting of the processed samples of batch i to an outlet,
b) Removing of a sample batch i+1 from a magazine assigned to the sample batch i+1, transporting of the sample batch i+1 to an inlet of a separation device, after all the samples of the sample batch i have been transported to the outlet, removing of the sample batch i from the outlet and transporting of the sample batch i to a magazine assigned to one of the sample batch i, wherein steps a) and b) are carried out repeatedly and steps a) and b) are carried out at least in part at the same time, wherein the samples are processed in a milling process, wherein the type of milling process depends on the type of sample, wherein a code is assigned to each of the sample batches, with the following further steps:
- Receiving of a control command for the processing of the sample batch i+1,
- Reading of the code assigned to the sample batch i+1, from the magazine in which the sample batch i+1 is located.

10. Method according to claim 9, wherein the outlet is rotated according to whether a sample batch i is intended for a Charpy or an Izod pendulum impact test.

11. Computer program product, in particular digital storage, with program means for controlling a device for the processing of sample batches in the following steps:
a) Feeding of individual samples of a sample batch i to a processing unit, sequential processing of the samples in the processing unit and transporting of the processed samples of batch i to an outlet,
b) Removing of a sample batch i+1 from a magazine assigned to the sample batch i+1, transporting of the sample batch i+1 to an inlet of a separation device, after all the samples of the sample batch i have been transported to the outlet, removing of the sample batch i from the outlet and transporting of the sample batch i to a magazine assigned to sample batch i,
wherein steps a) and b) are carried out repeatedly and steps a) and b) are carried out at least in part at the same time, wherein the samples are processed in a milling process, wherein the type of milling process depends on the type of sample, wherein a code is assigned to each of the sample batches, with the following further steps:
- Receiving of a control command for the processing of the sample batch i+1,
- Reading of the code assigned to the sample batch i+1, from the magazine in which the sample batch i+1 is located,
wherein program means for controlling the processing unit (130) is configured according to the respective type of the samples of a sample batch, which are to be processed.

12. Computer program product according to claim 11, wherein the program means for querying a database (108) are configured, wherein the codes of the sample batch that are to be processed are stored in the database.

13. Computer program product according to claim 12, wherein the database is part of a laboratory information management system (LIMS) (106).

14. Computer program product according to one of the previous claims 11 to 13, wherein the program means for controlling the outlet are configured according to whether the samples of a sample batch are samples for an Izod or for a Charpy pendulum impact test.

## Revendications

1. Dispositif pour le traitement de lots d'échantillons (116) avec
- un certain nombre de magasins (112) pour recevoir les lots d'échantillons avec un code (114) lisible par machine sur chacun des magasins,
- des premiers moyens de transport (120, 122, 124) pour transporter un lot d'échantillons d'un des magasins vers une entrée (126) d'un dispositif de séparation (128) et pour transporter un lot traité d'échantillons (158) depuis une sortie (154) vers l'un des magasins,
- une unité de traitement (130) pour traitement d'échantillons individuels/isolés fournis / envoyés par le dispositif de séparation, l'unité de traitement comportant un dispositif de découpe d'encoches (132, 134, 136, 140), ce dispositif de découpe d'encoches comportant une première et une deuxième broche d'usinage de l'encoche,
- une unité de commande (102) destiné à sélectionner la première ou la deuxième broche pour le traitement d'un échantillon en fonction du type d'échantillon,
- des deuxièmes moyens de transport (146, 148, 150, 152) pour transporter vers la sortie des échantillons isolés traités par le dispositif de traitement.

2. Dispositif selon la revendication 1, ayant une table d'échantillons de magasin X / Y (110) pour recevoir le magasin.

3. Dispositif selon la revendication 1, dans lequel le code lisible par machine est un code à barres.

4. Dispositif selon l'une des revendications précédentes 1 à 3, dans lequel l'entrée du dispositif de séparation est conçu comme une gaine d'entrée destinée à recevoir un lot d'échantillons des premiers moyens de transport, et le dispositif de séparation comporte un poussoir d'échantillons pour l'alimentation individuelle d'échantillons vers le dispositif de traitement à partir de la gaine d'entrée.

5. Dispositif selon l'une des revendications précédentes 1 à 4, dans lequel la sortie et l'entrée entre les magasins et l'unité de travail sont disposés l'un derrière l'autre.

6. Dispositif selon l'une des revendications 1 à 5, dans lequel la sortie est conçue pour pouvoir tourner sur 180°, et l'unité de commande fait pivoter la sortie selon que, parmi les échantillons, un échantillon est destiné à subir un essai de choc à balancier Charpy ou Izod.

7. Dispositif selon l'une des revendications précédentes 1 à 6, dans lequel les premiers et deuxièmes moyens de transport sont adaptés de façon à transporter avec un mouvement de translation, les trajectoires des mouvements de translation étant sensiblement parallèles les unes aux autres.

8. Dispositif selon l'une des revendications précédentes 1 à 7, apte à être relié à une unité de commande connectée à un système de gestion d'information de laboratoire LIMS (106).

9. Procédé pour le traitement de lots d'échantillons, comprenant les étapes consistant à :
a) ajouter des échantillons individuels d'un lot d'échantillons i à une unité de traitement, traiter séquentiellement les échantillons dans l'unité de traitement et transporter le lot d'échantillons i traités vers une sortie,
b) retirer un lot d'échantillons i + 1 à partir d'un lot d'échantillons i + 1 du magasin associé, transporter le lot d'échantillons i + 1 vers l'entrée d'un dispositif de séparation, après que tous les échantillons i du lot d'échantillons aient été transportés vers la sortie, en prenant le lot d'échantillon i à partir de la sortie, et transporter le lot d'échantillon i vers le magasin associé au lot d'échantillon i,
dans lequel les étapes a) et b) sont effectuées à plusieurs reprises, et la mise en oeuvre des étapes a) et b) a lieu au moins partiellement simultanément, le traitement des échantillons étant effectué dans un processus de broyage, de sorte que le type de processus de fraisage dépend du type d'échantillon, un code étant associé à chacun des lots d'échantillons, avec les étapes supplémentaires suivantes :
- réception d'une commande de contrôle pour éditer le lot d'échantillons i + 1,
- lecture du code qui est attribué au lot d'échantillons i + 1, provenant du magasin dans lequel se trouve le lot d'échantillons i + 1.

10. Procédé selon la revendication 9, dans lequel la sortie pivote en fonction du fait qu'un lot d'échantillons i est destiné à un essai de choc pendulaire Charpy ou Izod.

11. Produit de programme informatique, en particulier mémoire numérique, avec des moyens de programme pour commander un dispositif de traitement des lots d'échantillons par les étapes suivantes :
a) ajout d'échantillons individuels d'un lot d'échantillons i à une unité de traitement, traitement séquentiel de l'échantillon dans l'unité de traitement, et transport des lots d'échantillons i traités vers une sortie,
b) retrait d'un lot d'échantillons i + 1 à partir d'un lot d'échantillons i + 1 du magasin associé, transport du lot d'échantillons i + 1 à l'entrée d'un dispositif de séparation, après que tous les échantillons i du lot d'échantillons aient été transporté vers la sortie, en prélevant le lot d'échantillon i à partir de la sortie, et transport du lot d'échantillon i vers le magasin associé au lot d'échantillon i,
dans lequel les étapes a) et b) sont effectuées à plusieurs reprises et la mise en oeuvre des étapes a) et b) a lieu au moins partiellement en même temps, le traitement des échantillons étant effectués dans un procédé de broyage, de sorte que le type du procédé de broyage dépend du type d'échantillon, un code étant associé à chacun des lots d'échantillons, avec les étapes supplémentaires suivantes :
- réception d'une commande de contrôle pour éditer le lot d'échantillons i + 1,
- lecture du code affecté au lot d'échantillons i + 1, du magasin dans lequel se trouve le lot d'échantillons i + 1,
dans lequel les moyens de programme informatique sont configurés pour commander l'unité de traitement (130) en fonction de la nature des échantillons d'un lot d'échantillons traités.

12. Produit de programme informatique selon la revendication 11, dans lequel les moyens de programme sont configurés pour interroger une base de données (108), les codes des lots d'échantillons à traiter étant stockés dans la base de données.

13. Produit de programme informatique selon la revendication 12, dans lequel la base de données fait partie d'un système de gestion d'information de laboratoire (LIMS) (106).

14. Produit de programme informatique selon la revendication 11 à 13, dans lequel les moyens de programme informatique sont adaptés pour commander la sortie selon que, parmi les échantillons d'un lot d'échantillons, l'échantillon est destiné à subir un essai de choc pendulaire Izod ou Charpy.
